# EUROPEAN PATENT APPLICATION

(11) **EP 2 704 428 A2**
(43) Date of publication of application: **05.03.2014**
(21) Application number: 12199443.8
(22) Date of filing: 27.12.2012
(51) Int. Cl.: H04N 7/10

(54) **Digital TV signal receiving apparatus**

(30) Priority: 31.08.2012 KR 20120096716
(71) Applicant: ICube Corp., Seongnam-si, Gyeonggi-do (KR)
(72) Inventor: Kim, Cheol-Wan, SEOUL (KR)
(74) Representative: Karlsson, Leif Karl Gunnar

(57) **Abstract**

A digital TV signal receiving apparatus is provided. According to an exemplary embodiment of the present invention, the digital TV signal receiving apparatus is able to be inserted into an electrical socket using the electrical plug disposed in the body, and also to receive a high-sensitivity digital TV signal via an external antenna, such as a common antenna, and transmit the digital TV signal to various terminals.

## Description

### CROSS-REFERENCE TO RELATED APPLICATION

This application claims the benefit under 35 U.S.C. §119(a) of Korean Patent Application No. 10-2012-0096716, filed on August 31, 2012, the entire disclosure of which is incorporated herein by reference for all purposes.

### BACKGROUND

### 1. Field

The following description relates to a digital TV signal receiving apparatus, and, more specifically, to an apparatus which is embedded with an electrical plug able to be plugged in an electrical socket indoors.

### 2. Description of the Related Art

With the introduction of mobile terminals including smart phones, more and more people are now able to enjoy Digital Multimedia Broadcasting (DMB) programs using their mobile terminals. As the Korean Patent publication No. 10-2011-0096101 disclosed, a number of devices has been developed to receive DMB signals and transmit the signals to mobile terminals, so that mobile terminal users are able to watch TV using their mobile terminals which is not embedded with a DMB receiver. However, since the above-described mobile TV receivers are running on battery, the user can watch TV only within a limited time. In addition, watching TV inside of a building noticeably lowers a level of sensitivity of receiving a digital TV signal, so that the user is not capable to watch TV seamlessly using a smart phone, a computer and a tablet PC.

### SUMMARY

The following description relates to a digital TV signal receiving apparatus which includes an electronic plug so as to be inserted into an electrical socket at home or indoors and receives a high-sensitivity digital TV signal via an external antenna, such as a common antenna, to transmit the digital TV signal to various terminals via wireless/wired communication.

In one general aspect of the present invention, a digital TV signal receiving apparatus which receives a digital TV signal and transmit the digital TV signal to an external terminal to enable watching TV on the external terminal, the digital TV signal receiving apparatus includes a body; an electrical plug disposed on outside of the body and configured to receive external power; an antenna connector disposed in the body and configured to be connected to an external antenna; a communication unit configured to, in response to control from a control unit disposed in the body, establish connection to a wireless or wired communication network; a digital TV signal receiving unit configured to, in response to the control of a control unit disposed in the body, receives a digital TV signal of a predetermined channel through the antenna, extracts video data from the digital TV signal, and transmit the video data to an external terminal which has requested the video data; and the control unit configured to, in the case where the external power is received through the electrical plug disposed in the body, controls to supply the external power to each element of the digital TV signal receiving apparatus and controls the communication unit to be connected to the wireless or wired communication network, and, in the case where the request for the digital TV signal of the predetermined channel is received, control the digital TV signal receiving unit to transmit the digital TV signal to the external terminal which has requested the digital TV signal.

The digital TV signal receiving apparatus may further include a power switch configured to, upon being turned on, supply the external power received through the electrical plug in response to control from the control unit and, upon being turned off, block the external power in response to control from the control unit.

The digital TV signal receiving apparatus may further include a power supplying unit configured to, when the power switch is turned on and then the external power is supplied, supply the external power to each element of the digital TV signal receiving apparatus in response to control from the control unit.

The digital TV signal receiving apparatus may further include, on the outside of the body, a reception sensitivity display unit configured to display a level of sensitivity of receiving a digital TV signal received through the antenna; and a communication-status display unit configured to display a communication status of a wireless or wired communication network connected via the communication unit.

The body may further include a reception sensitivity checking unit configured to, in response to control from the control unit, check a level of sensitivity of receiving the digital TV signal and display the checked level of sensitivity on the reception sensitivity display unit; and a communication-status checking unit configured to, in response to control from the control unit, check a communication status of the wireless or wired communication network and display the checked communication status on the communication status display unit.

The body may include two or more digital TV signal receiving units, and, in response to receiving a request for digital TV signals of different channels from two or more external terminals, the control unit receives the digital TV signals of different channels through the two or more digital TV signal receiving units and transmits the digital TV signals to the two or more external terminals.

The communication unit may include a wireless communication unit comprising at least one of a Wireless LAN (Wi-Fi) communication module, a Bluetooth communication module and a Near Field Communication (NFC) module, and a USB port configured to enable wired communication with the external terminal using a USB.

The digital TV signal may include at least one of an ATSC-MH signal, an ATSC signal, a DMB-T signal, a DMB signal, a DAB signal, a T-DMB signal, an ISDB-T signal, an ISDB-T signal, a DVB-T signal, a DVB-T2 signal, a DVB-C signal, a DVB-C2 signal, a DVB-S signal, a DVB-S2 signal, a DVB-H signal, a DVB-H2 signal, a DVB-SH signal, a SBTVD signal, a DTMB signal, a CMMB signal, and an Open Cable signal.

Other features and aspects will be apparent from the following detailed description, the drawings, and the claims.

### BRIEF DESCRIPTION OF THE DRAWINGS

FIG. 1 is a perspective view illustrating a digital TV signal receiving apparatus according to an exemplary embodiment of the present invention;
FIG. 2 is a block diagram illustrating an example of the digital TV signal receiving apparatus 100 of FIG. 1;
FIG. 3 is an exemplary case where the digital TV signal receiving apparatus of FIG. 1 is applied; and
FIG. 4 is a block diagram illustrating an external terminal able to be connected to the digital TV signal receiving apparatus of FIG. 1.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein will suggest themselves to those of ordinary skill in the art. Also, descriptions of well-known functions and constructions may be omitted for increased clarity and conciseness.

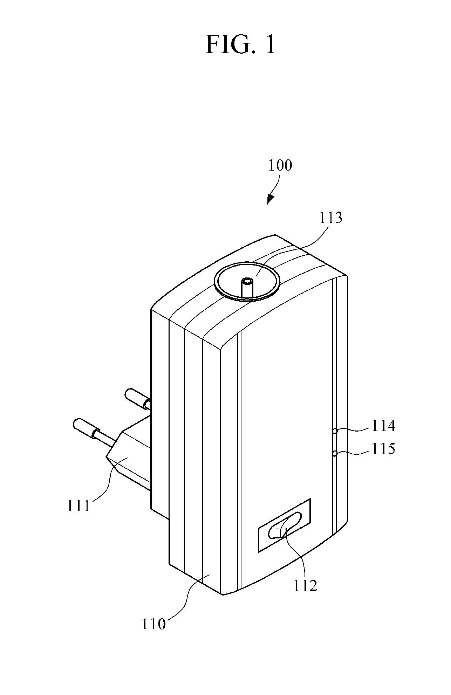

FIG. 1 is a perspective view illustrating a digital TV signal receiving apparatus according to an exemplary embodiment of the present invention.

Referring to FIG. 1, the digital TV signal receiving apparatus 100 according to an exemplary embodiment of the present invention is a device which receives a digital TV signal and transmits the digital TV signal to an external terminal which requests the digital TV signal. At this time, the digital TV signal may include at least one of an ATSC-MH signal, an ATSC signal, a DMB-T signal, a DMB signal, a DAB signal, a T-DMB signal, an ISDB-T signal, an ISDB-T signal, a DVB-T signal, a DVB-T2 signal, a DVB-C signal, a DVB-C2 signal, a DVB-S signal, a DVB-S2 signal, a DVB-H signal, a DVB-H2 signal, a DVB-SH signal, a SBTVD signal, a DTMB signal, a CMMB signal, and an Open Cable signal. However, the above-mentioned digital TV signals are merely exemplary, and a digital TV signal described in the present invention is not limited thereto.

As illustrated in FIG. 1, the digital TV signal receiving apparatus 100 includes a body 110 and an electrical plug 111. The electrical plug 111 is disposed on the outside of the body 110 and configured to be plugged in an electrical socket to supply power to each element of the digital TV signal receiving apparatus 100. When the electrical plug is plugged in an electrical socket installed on a wall indoors, the digital TV signal receiving apparatus 100 may be fixed on a wall. In addition, since the digital TV signal receiving apparatus 100 is supplied with external power all the time, a battery is not necessary and, in turn, it is possible to make the digital TV signal receiving apparatus 100 smaller, thereby leading to reduced manufacturing costs.

In addition, the digital TV signal receiving apparatus 100 includes an antenna connector 113 which is disposed on the outside of the body and configured to be connected to an external antenna (for example, an apartment common antenna and a home antenna). At this time, the antenna connector 113 may be an IEC connector to be connected to a roof top antenna so as to receive terrestrial digital TV signals, thereby addressing a low level of sensitivity of receiving a digital TV signal indoor.

Meanwhile, the digital TV signal receiving apparatus 110 may further include a power switch 112 on the outside of the body. The power switch 112 is used to supply or block power to each element of the digital TV signal receiving apparatus 100. More specifically, upon being turned on, the power switch 112 disposed on the outside of the body 110 supplies power, which is received via the electrical plug 111, to the digital TV signal receiving apparatus 100 and, upon being turned off, the power switch 112 blocks the power supplied to the digital TV signal receiving apparatus 100.

In another example, the digital TV signal receiving apparatus 100 may further include a reception sensitivity display unit 114 and a communication-status display unit 115, each disposed on one side (for example, a front side) of the body 110. The reception sensitivity display unit 114 displays a level of sensitivity of receiving a digital TV signal, and the communication-status display unit 115 displays a communication status with respect to an external terminal. According to an exemplary embodiment of the present invention, the reception sensitivity display unit 114 and the communication-status display unit 115 may be composed of Light Emitting Diodes (LED) which is able to display various color light.

For example, the reception sensitivity display unit 114 may display a green light in response to a decent level of sensitivity while displaying a red light in response to an inferior level of sensitivity. Meanwhile, the communication-status display unit 115 may display only green light to indicate different communication statuses. Specifically, in order to indicate different communication statuses, the communication-status unit 115 may use green gradations or a different brightness level of green lights. Furthermore, the communication-status unit 115 may turn on and off a green light when a communication status is unstable.

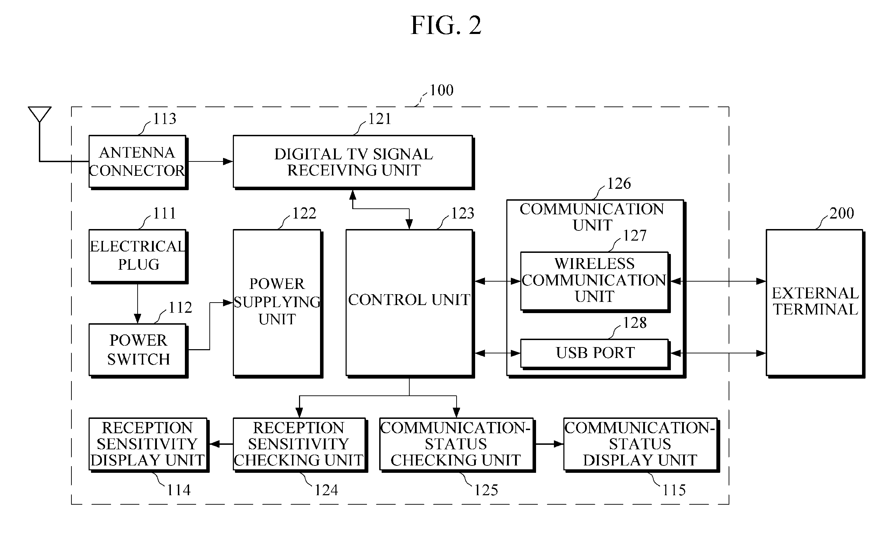

FIG. 2 is a block diagram illustrating an example of the digital TV signal receiving apparatus 100 of FIG. 1. FIGS. 1 and 2 are provided to specifically explain the digital TV signal receiving apparatus 100 which receives a digital TV signal and transmits the digital TV signal to an external terminal 200 so that a user may be able to watch TV on the corresponding external terminal 200. At this time, the external terminal 200 is a terminal in which a short-range wireless communication module is installed, and includes a smart phone, a tablet PC and a computer. The external terminal 200 according to an exemplary embodiment of the present invention may be a terminal which does not include an additional TV receiver.

As illustrated in FIG. 2, the digital TV signal receiving apparatus 100 includes a receiving unit 121 disposed in the body 110. The receiving unit 121 performs data processing on a digital TV signal which is received via an external antenna connected to the antenna connector 113. The digital TV signal receiving unit 121 may include various TV signal processor chips to receive various types of transmitted digital TV signals. For example, the digital TV signal processor chip may be an ATSC-MH signal processor chip, an ATSC signal processor chip, a DMB-T signal processor chip, a DMB signal processor chip, a DAB signal processor chip, a T-DMB signal processor chip, an ISDB-T signal processor chip, an ISDB-T signal processor chip, a DVB-T signal processor chip, a DVB-T2 signal processor chip, a DVB-C signal processor chip, a DVB-C2 signal processor chip, a DVB-S signal processor chip, a DVB-S2 signal processor chip, a DVB-H signal processor chip, a DVB-H2 signal processor chip, a DVB-SH signal processor chip, a SBTVD signal processor chip, a DTMB signal processor chip, a CMMB signal processor chip, and an Open Cable signal processor chip

The digital TV signal receiving apparatus 100 may further include a power supplying unit 122. When the power switch 112 of the body 110 is turned on and, in turn, external AC power is received via the electrical plug 111, the power supplying unit 112 supplies power to each element of the digital TV signal receiving apparatus 100. For example, the power supplying unit 122 may be a Switching Mode Power Supplier (SMPS). The SMPS refers to a device which outputs DC power in response to input AC power, or, in other words, a device which converts power to be a predetermined voltage range and output the converted power. As the power supplying unit 112 helps to stably supply power to each element of the digital TV signal receiving apparatus 100, a user is able to watch TV on the external terminal 200 connected to the digital TV signal receiving apparatus 100 and no longer needs to be concerned over remaining battery life.

In addition, the body 110 of the digital TV signal receiving apparatus 100 may further include a control unit 123, a reception sensitivity checking unit 124 and a communication-status checking unit 125 and a communication unit 126. The control unit 123 controls overall operation of the digital TV signal receiving apparatus 100.

Specifically, the control unit 123 may control the reception sensitivity checking unit 124 to display a level of sensitivity of receiving a digital TV signal on the reception sensitivity display unit 114.

In response to control from the control unit 123, the reception sensitivity checking unit 124 checks a level of sensitivity of receiving a digital TV signal received via an antenna connected to the antenna connector 113, and then may control the reception sensitivity display unit 124 to display a color light corresponding to the checked level of sensitivity. In the case of a decent level of sensitivity of receiving a digital TV signal, the reception sensitivity checking unit 124 may display a green light to notify a user of a decent level of sensitivity of receiving a digital TV signal. On the other hand, in the case of inferior reception sensitivity, the reception sensitivity checking unit 124 may display a red light to notify a user of an inferior level of sensitivity of receiving a digital TV signal.

In addition, the control unit 123 may control the communication-status checking unit 125 to display the current communication status on the communication-status display unit 115.

The communication-status checking unit 125 may check a communication status of a currently-connected wireless communication network and display the checked communication status on the communication-status display unit 115. At this time, according to how decent the current reception sensitivity is, a green light may be displayed in phase in a number of bars, a different brightness level of the green light may be displayed in phase (for example, the more decent reception sensitivity is, the brighter green LEDs emits), or green LED may be turned on and off, so that a user may be informed of the current communication status.

In addition, the control 123 may control the communication unit 126 to be connected to a wireless and/or wired communication network.

Specifically, in response to control from the control unit 123, the communication unit 126 establishes connection to the wireless and/or wired communication network. Meanwhile, the communication unit 126 is a wireless communication module which enables shot-range communications, and may include a wireless communication unit 127 and a USB port 128. The wireless communication unit 127 includes at least one of a Wireless LAN (Wi-Fi) communication module, a Bluetooth communication module and Near Field Communication (NFC) module, and the USB port 128 is capable to communicate with a signal processing unit of the external terminal 200 via a USB. However, the above is merely exemplary, and it is obvious that other various short-range wireless and/or wired communication modules may be included

In response to control from the control unit 123, the wireless communication unit 127 searches for a neighbor Access Point and establishes connection to a wireless communication network via the found AP. In addition, the wireless communication unit 127 may receive and transmit various types of information with respect to the neighbor external terminal 200 connected to the wireless communication network. In addition, the USB port 128 may be configured as a hole formed on a bottom surface of the body 110. A USB cable may be inserted into the USB port 128 so as to be connected to the digital TV signal receiving apparatus 100, and may receive and transmit various data including TV video data with respect to the external terminal 200 connected via the USB cable.

In response to receiving a requests for a digital TV signal of a specific channel from the external terminal 200 via the wireless communication unit 127 or the USB port 128, the control unit 123 may control the digital TV signal receiving unit 121 to receive a digital TV signal from the specific channel, extract video data, and transmit the extracted video data to the external terminal 200.

Specifically, in response to the control from the control unit 123, the digital TV signal receiving unit 121 may receive the digital TV signal from the requested specific channel via an antenna connected to the antenna connector 112, extract video data from the digital TV signal, and transmit the extracted video data to the external terminal 200 via the wireless communication unit 127 or the USB port 128.

At this time, when the external terminal 200 transmits a HTTP request to the digital TV signal receiving apparatus 100 via a connected wireless communication network or USB communications, the digital TV signal receiving apparatus 100 may converts the video data and transmit a response including the converted video data to the external terminal 200.

Meanwhile, the digital TV signal receiving apparatus 100 may include two or more digital TV signal receiving units 121. In response to receiving a request for digital TV signals of different channels from two or more external terminals 200, the control unit 123 may control a plurality of digital TV signal receiving units to perform processing on the digital TV signals of the requested channels. Specifically, in response to control from the control unit 123, a plurality of the digital TV signal receiving units 121 may receive digital TV signals from corresponding channels, extract video data from the received digital TV signals, and transmit the extracted video data to the external terminal 200. The digital TV signal receiving apparatus 100 according to an exemplary embodiment of the present invention enables a user to watch multiple TV channels simultaneously using a plurality of mobile terminals.

Meanwhile, in another example, the digital TV signal receiving apparatus 100 may further include an embedded antenna (Now Shown) disposed in the body 110. At this time, the embedded antenna (Not Shown) may be taken out from or put into one side of the body 110 in a sliding manner. The embedded antenna (Not Shown) enables receiving a digital TV signal even in the case where there is no external antenna connected to the antenna connector 113. That is, when there is no external antenna, such as a common antenna, in a user's residential area, the user may receive a digital TV signal via an embedded antenna (Not Shown) included the digital TV signal receiving apparatus 100.

In response to receiving the digital TV signal via the embedded antenna, the digital TV signal receiving unit 121 processes video data included in the digital TV signal and transmits the processed video data to the external terminal 200 which requests the digital TV signal.

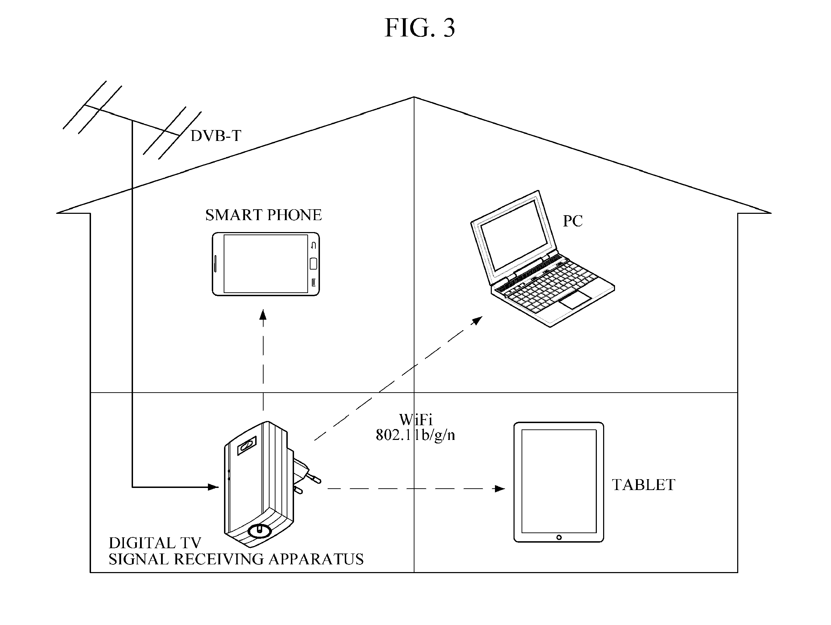

FIG. 3 is an exemplary case where the digital TV signal receiving apparatus 100 of FIG. 1 is applied. Referring to FIGS. 1 to 3, the digital TV signal receiving apparatus 100 according to an exemplary embodiment of the present invention may be used as being plugged in an electrical socket of a building. For example, the digital TV signal receiving apparatus 100 may receive a DVB-T signal via an apartment common antenna installed on a roof or an indoor-installed antenna. As described above, the digital TV signal receiving apparatus 100 includes at least one TV receiving module and transmits digital TV signals corresponding to a plurality of channels to a plurality of external terminals 200 including a smart phone, a Portable Digital Assistant (PDA), a tablet PC, a laptop, and a desktop PC through wireless communication such as Wi-Fi, so that a user may watch multiple channels simultaneously using a plurality of external terminals 200.

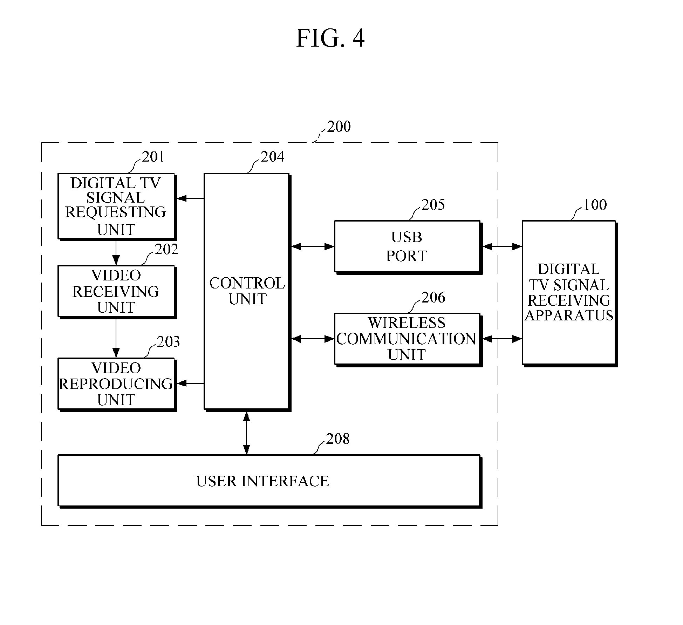

FIG. 4 is a block diagram illustrating an external terminal able to be connected to the digital TV signal receiving apparatus of FIG. 1.

Referring to FIG. 4, the external terminal 200 able to be connected to the digital TV signal receiving apparatus 100 may include a digital TV signal requesting unit 201, a video receiving unit 202, a video reproducing unit 203, a control unit 204, a USB port 205, a wireless communication unit 206 and a user interface 208. Each element of the external terminal 200 may be in a form of an application and installed to the external terminal 200.

In response to control from the control unit 204, the digital TV signal requesting unit 201 may transmit a request for a digital TV signal to the digital TV signal receiving apparatus 100 which is connected via the wireless communication unit 206 or the USB port 205.

The wireless communication unit 206 is a wireless communication module enabling short-range wireless communication, and may include at least one of a Wi-Fi communication module, a Bluetooth communication module and an NFC module. However, the above are merely exemplary, and other various wireless communication modules may be included. In response to control from the control unit, the wireless communication unit 207 establishes wireless connection with respect to the digital TV signal receiving apparatus 100.

The video receiving unit 202 receives from the digital TV signal receiving apparatus 100 video data converted from a digital TV signal.

In response to control from the control unit 204, the video reproducing unit 203 decodes the video data received by the video receiving unit 202 and reproduces the decoded video data.

The control unit 204 controls overall operation to process and reproduce the video data. Specifically, the control unit 204 controls each element of the digital TV signal receiving apparatus 100 using the user interface 208 in response to user interface manipulation including a request for watching TV, channel setting, and volume control. For example, in a case where a user manipulates the user interface to request a service of watching a TV and then sets a corresponding channel, the control unit 204 controls the digital TV signal requesting unit 201 based on information about the manipulation and the set channel to transmit a request for a digital TV signal to the digital TV signal receiving apparatus 100, and, if video data is received in response to the request for a digital TV signal, controls the video reproducing unit 203 to reproduce the video.

The user interface 208 may support various user interface manipulation necessary for a user to reproduce a video.

The digital TV signal receiving apparatus includes an electrical plug disposed on the outside of the body to be plugged in an electrical socket at home or indoor and receives a high-sensitivity digital TV signal to transmit the digital TV signal to an external terminal so that the digital TV signal receiving apparatus may support a user to watch TV even on an external terminal not carrying a function of receiving a digital TV signal.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A digital TV signal receiving apparatus which receives a digital TV signal and transmits the digital TV signal to an external terminal to enable watching TV on the external terminal, the digital TV signal receiving apparatus comprising:
a body;
an electrical plug disposed on outside of the body and configured to receive external power;
an antenna connector disposed in the body and configured to be connected to an external antenna;
a communication unit configured to, in response to control from a control unit disposed in the body, establish connection to a wireless or wired communication network;
a digital TV signal receiving unit configured to, in response to the control of a control unit disposed in the body, receives a digital TV signal of a predetermined channel through the antenna, extracts video data from the digital TV signal, and transmit the video data to an external terminal which has requested the video data; and
the control unit configured to, in the case where the external power is received through the electrical plug disposed in the body, controls to supply the external power to each element of the digital TV signal receiving apparatus and controls the communication unit to be connected to the wireless or wired communication network, and, in the case where the request for the digital TV signal of the predetermined channel is received, control the digital TV signal receiving unit to transmit the digital TV signal to the external terminal which has requested the digital TV signal.

2. The digital TV signal receiving apparatus of claim 1, further comprising:
a power switch configured to, upon being turned on, supply the external power received through the electrical plug in response to control from the control unit and, upon being turned off, block the external power in response to control from the control unit.

3. The digital TV signal receiving apparatus of claim 2, further comprising:
a power supplying unit configured to, when the power switch is turned on and then the external power is supplied, supply the external power to each element of the digital TV signal receiving apparatus in response to control from the control unit.

4. The digital TV signal receiving apparatus of claim 1, further comprising, on the outside of the body:
a reception sensitivity display unit configured to display a level of sensitivity of receiving a digital TV signal received through the antenna; and
a communication-status display unit configured to display a communication status of a wireless or wired communication network connected via the communication unit.

5. The digital TV signal receiving apparatus of claim 5, wherein the body further comprises
a reception sensitivity checking unit configured to, in response to control from the control unit, check a level of sensitivity of receiving the digital TV signal and display the checked level of sensitivity on the reception sensitivity display unit; and
a communication-status checking unit configured to, in response to control from the control unit, check a communication status of the wireless or wired communication network and display the checked communication status on the communication status display unit.

6. The digital TV signal receiving apparatus of any one of claims 1 to 5, wherein the body comprises two or more digital TV signal receiving units, and, in response to receiving a request for digital TV signals of different channels from two or more external terminals, the control unit receives the digital TV signals of different channels through the two or more digital TV signal receiving units and transmits the digital TV signals to the two or more external terminals.

7. The digital TV signal receiving apparatus of any one of claims 1 to 5, wherein the communication unit comprises
a wireless communication unit comprising at least one of a Wireless LAN (Wi-Fi) communication module, a Bluetooth communication module and a Near Field Communication (NFC) module, and
a USB port configured to enable wired communication with the external terminal using a USB.

8. The digital TV signal receiving apparatus of any one of claims 1 to 5, wherein the digital TV signal comprises at least one of an ATSC-MH signal, an ATSC signal, a DMB-T signal, a DMB signal, a DAB signal, a T-DMB signal, an ISDB-T signal, an ISDB-T signal, a DVB-T signal, a DVB-T2 signal, a DVB-C signal, a DVB-C2 signal, a DVB-S signal, a DVB-S2 signal, a DVB-H signal, a DVB-H2 signal, a DVB-SH signal, a SBTVD signal, a DTMB signal, a CMMB signal, and an Open Cable signal.
